# EUROPÄISCHE PATENTSCHRIFT

(11) **EP 3 909 416 B1**
(45) Veröffentlichungstag und Bekanntmachung des Hinweises auf die Patenterteilung: **11.10.2023**
(21) Anmeldenummer: 21173298.7
(22) Anmeldetag: 11.05.2021
(51) Int. Cl.: A01D 43/08

(54) **FELDHÄCKSLER MIT EINEM FÖRDERKANAL ZUM FÖRDERN VON ERNTEGUT UND VERFAHREN ZUM FÖRDERN DES ERNTEGUTS**
FORAGE HARVESTER WITH A CONVEYING CHANNEL FOR CONVEYING CROP MATERIAL AND METHOD FOR CONVEYING THE CROP MATERIAL
RAMASSEUSE-HACHEUSE DOTÉE D'UN CANAL DE TRANSPORT PERMETTANT DE TRANSPORTER LE PRODUIT DE LA RÉCOLTE ET PROCÉDÉ DE TRANSPORT DU PRODUIT DE LA RÉCOLTE

(30) Priorität: 13.05.2020 DE 102020002864
(43) Veröffentlichungstag der Anmeldung: 17.11.2021
(73) Patentinhaber: Maschinenfabrik Bernard Krone GmbH & Co. KG, 48480 Spelle (DE)
(72) Erfinder: Langelage, Manuel, 49509 Recke (DE)

(56) Entgegenhaltungen:
- EP-A1- 1 396 184
- EP-A1- 2 561 746
- EP-A1- 3 533 315
- US-A1- 2008 264 024
- US-A1- 2015 327 439
- US-B2- 6 539 693

## Beschreibung

Die vorliegende Erfindung betrifft einen Feldhäcksler mit einem Förderkanal zum Fördern von Erntegut, der in einer Förderrichtung des Ernteguts einer Zerkleinerungsvorrichtung für das Erntegut nachgeordnet ist, wobei der Förderkanal einen Nachbeschleuniger umfasst, der in einer Grasernteanordnung in einer Beschleunigungsposition angeordnet ist, in der er in den Förderkanal eingestellt und zum Beschleunigen des Ernteguts vorgesehen ist, und wobei in einer Maisernteanordnung ein Aufbereiter in den Förderkanal aufgenommen ist, der in der Grasernteanordnung nicht im Förderkanal angeordnet ist. Die vorliegende Erfindung betrifft weiterhin ein Verfahren zum Fördern von Erntegut, insbesondere Mais, in einem Förderkanal eines solchen Feldhäckslers.

Feldhäcksler weisen einen Förderkanal auf, der einer Zerkleinerungsvorrichtung, die zum Zerkleinern von Erntegut vorgesehen ist, in einer Förderrichtung des Ernteguts nachgeordnet ist. Im Förderkanal ist in einer Grasernteanordnung zum Beschleunigen von Gras während eines Grasbetriebs, bei dem mit dem Feldhäcksler Gras geerntet wird, regelmäßig ein Nachbeschleuniger angeordnet, der die Geschwindigkeit des Grass erhöht, so dass dieses durch ein dem Förderkanal nachgeordnetes Auswurfrohr auf einen Transportwagen überladbar ist. In einer Maisernteanordnung ist dem Nachbeschleuniger herkömmlich ein Aufbereiter vorgeordnet, mit dem in einem Maisbetrieb, bei dem mit dem Feldhäcksler Mais geerntet wird, die Maiskörner aufgebrochen werden, so dass die Stärke im Innern der Maiskörner von außen zugänglich ist. Die Maiskörner werden auch durch den Aufbereiter beschleunigt.

Die Druckschrift EP 1 145 616 A1 offenbart einen Feldhäcksler, bei dem der Auswurfbeschleuniger nur bedarfsweise in den Auswurfkanal eingeschwenkt werden kann. Sie offenbart insbesondere entweder den Auswurfbeschleuniger oder eine Quetschvorrichtung in den Förderkanal aufzunehmen. Dadurch können der Kraftstoffverbrauch des Feldhäckslers sowie der Verschleiß am Auswurfbeschleuniger verringert werden. Das Dokument US 2015/327439 A1 offenbart einen Feldhäcksler gemäß dem Oberbegriff des Anspruchs 1.

Aufgabe der vorliegenden Erfindung ist es, einen Feldhäcksler zu schaffen, bei dem ein gleichmäßiges Überladen des Ernteguts sowohl in einer Grasernteanordnung als auch in einer Maisernteanordnung gewährleistest ist, wobei der Kraftstoffverbrauch und/oder der Verschleiß weiter verringert sind.

Die Aufgabe wird gelöst mit einem Feldhäcksler mit den Merkmalen des unabhängigen Patentanspruchs 1 und einem Verfahren zum Fördern von Erntegut mit den Merkmalen des unabhängigen Patentanspruchs 10.

Vorteilhafte Ausführungsformen sind den abhängigen Ansprüchen entnehmbar.

Dafür wird ein Feldhäcksler geschaffen. Der Feldhäcksler weist einen Förderkanal zum Fördern von Erntegut auf. Der Förderkanal ist in einer Förderrichtung des Ernteguts einer Zerkleinerungsvorrichtung für das Erntegut nachgeordnet. Mit der Zerkleinerungsvorrichtung wird das Erntegut zerkleinert. Dem Förderkanal ist zudem beorzugt in Förderrichtung gesehen ein Auswurfrohr nachgeordnet. Das Auswurfrohr ist zum Auswerfen des Ernteguts auf einen Transportwagen vorgesehen.

Der Förderkanal umfasst einen Nachbeschleuniger, der in einer Grasernteanordnung in einer Beschleunigungsposition angeordnet ist, in der er in den Förderkanal eingestellt ist. Der Nachbeschleuniger ist zum Beschleunigen des Ernteguts vorgesehen.

In einer Maisernteanordnung ist ein Aufbereiter in den Förderkanal aufgenommen, der in der Grasernteanordnung nicht im Förderkanal angeordnet ist. Der Aufbereiter ist zum Aufbereiten von Mais vorgesehen. Mit dem Aufbereiter werden die Maiskörner aufgebrochen, so dass die Stärke im Innern der Maiskörner von außen zugänglich ist.

Der Feldhäcksler zeichnet sich dadurch aus, dass er in der Maisernteanordnung ein Gebläse umfasst, dass zum Beschleunigen von Erntegut dient.

Ein Gebläse im Sinne der Erfindung ist zum Beschleunigen des Ernteguts vorgesehen, ohne mechanisch auf das Erntegut einzuwirken. Zum Beschleunigen wird stattdessen ein Luftstrom genutzt.

Da das Gebläse nicht mechanisch mit dem Erntegut zusammenwirkt, kann ein Verschleiß an dem im Graserntebetrieb mechanisch mit dem Erntegut zusammenwirkenden Nachbeschleuniger im Graserntebetrieb vermieden werden.

Dafür ist es vorgesehen, dass der Nachbeschleuniger in der Maisernteanordnung von der Beschleunigungsposition in eine Gebläseposition verstellbar ist, in der er zumindest teilweise aus dem Förderkanal ausgestellt ist und als Gebläse wirkt. Dadurch wird kein zusätzliches Gebläse benötigt, sondern der Nachbeschleuniger als Gebläse genutzt. Durch das zumindest teilweise Herausschwenken des Nachbeschleunigers aus dem Förderkanal wird ein in der Beschleunigungsposition durch den Nachbeschleuniger eingenommener Teil des Förderkanals freigestellt, den das Erntegut in der Gebläseposition daher ungehindert durchströmen kann. In Abhängigkeit von den Erntebedingungen und/oder dem Erntegut reicht der Aufbereiter dadurch zum Beschleunigen des Ernteguts aus.

Es hat sich gezeigt, dass das Überladen bei einer geringen Menge Erntegut ohne Nachbeschleuniger oftmals ungleichmäßig, das heißt in einem ungleich großen und/oder ungleich verteilten Erntegutstrom, erfolgt. Um dies zu kompensieren, wird der in der Gebläseposition vom Nachbeschleuniger erzeugte Luftstrom zum Vergleichmäßigen, Fördern und/oder Beschleunigen des Ernteguts genutzt. Dadurch kann auch eine geringe Menge Erntegut im Förderkanal gleichmäßig in den Transportwagen überladen werden.

Der Nachbeschleuniger weist bevorzugt einen Beschleunigungsrotor mit Beschleunigungsschaufeln auf, die in der Beschleunigungsposition mechanisch mit dem Erntegut zusammenwirken. In der Gebläseposition sind die Beschleunigungsschaufeln hingegen bevorzugt zum Erzeugen des Luftstroms vorgesehen. Dafür wird der Nachbeschleuniger nicht nur in der Beschleunigungsposition, sondern auch in der Gebläseposition angetrieben. Dabei wirken die Beschleunigungsschaufeln in der Gebläseposition aber nicht mechanisch auf das Erntegut ein. Stattdessen erzeugen sie den Luftstrom, der auf das Erntegut einwirkt.

Insgesamt wird zum Erzeugen des Luftstroms weniger Leistung benötigt, so dass der Antrieb des Nachbeschleunigers in der Gebläseposition weniger Energie verbraucht. Der Feldhäcksler verbraucht daher weniger Kraftstoff, wenn der Nachbeschleuniger in der Gebläseposition betrieben wird. Da das Erntegut zudem in der Gebläseposition nicht mechanisch auf die Beschleunigungsschaufeln einwirkt, ist der an den Beschleunigungsschaufeln verursachte Verschleiß geringer. Außerdem kann der Feldhäcksler dadurch leiser betrieben werden.

Der Aufbereiter ist, insbesondere auch bei großen Mengen Erntegut, zum Beschleunigen des Ernteguts ausreichend. In Abhängigkeit von den Erntebedingungen und dem Erntegut kann der Nachbeschleuniger aber auch in der Maisernteanordnung wie herkömmlich in der Beschleunigungsposition betrieben werden.

Der Feldhäcksler umfasst bevorzugt eine Steuerungseinheit, die dazu eingerichtet ist, den Nachbeschleuniger von der Beschleunigungsposition in die Gebläseposition zu verstellen. Dies kann vorzugsweise automatisch erfolgen, insbesondere wenn das Vorhandensein eines Aufbereiters in der Maiserntekonfiguration sensorisch erfasst oder manuell angezeigt wird. Das Verstellen des Nachbeschleunigers von der Beschleunigungsposition in die Gebläseposition und/oder zurück kann aber ebenfalls manuell auslösbar sein.

Die Steuerungseinheit ist weiterhin bevorzugt dazu eingerichtet, den vom Nachbeschleuniger in der Gebläseposition erzeugten Luftstrom einzustellen. Dabei wird bevorzugt zumindest die Stärke des Luftstroms eingestellt. Zusätzlich oder alternativ kann auch die Richtung des Luftstroms verstellbar vorgesehen sein.

Dabei ist die Steuerungseinheit bevorzugt dazu eingerichtet, den in der Gebläseposition vom Nachbeschleuniger erzeugten Luftstrom kontinuierlich oder stufenweise einzustellen. Vorzugsweise kann eine Stärke des Luftstroms durch Erhöhen einer Geschwindigkeit des Beschleunigungsrotors und/oder Verändern eines Abstands des Beschleunigungsrotors von einer Rückwand des Nachbeschleunigers verändert werden. Dadurch ist eine Gebläseleistung des Nachbeschleunigers beispielsweise erntegutabhängig und/oder in Abhängigkeit von Betriebswerten des Feldhäckslers und/oder in Abhängigkeit von aktuellen Erntebedingungen anpassbar.

Zudem kann die Richtung des Luftstroms einstellbar vorgesehen sein. Für eine Einstellung der Richtung des Luftstroms ist es bevorzugt, dass im Förderkanal und/oder am Nachbeschleuniger einstellbare Stromleitelemente vorgesehen sind. Die Stromleitelemente können in analoger Weise zur Einstellung der Stärke des Luftstroms erntegutabhängig und/oder in Abhängigkeit von Betriebswerten des Feldhäckslers und/oder in Abhängigkeit von aktuellen Erntebedingungen, insbesondere einer aktuellen Erntegutmenge und/oder aktuellen Erntegutverteilung, einstellbar sein.

In einer weiteren bevorzugten Ausführungsform weist der Förderkanal einen Sensor zum Erfassen der Erntegutmenge und/oder Erntegutverteilung auf. In dieser Ausführungsform ist es bevorzugt, dass die Steuerungseinheit dazu eingerichtet ist, die Stärke und/oder die Richtung des Luftstroms in Abhängigkeit von der Erntegutmenge und/oder der Erntegutverteilung einzustellen.

Dabei ist es bevorzugt, dass die Steuerungseinheit dazu eingerichtet ist, den Luftstrom selbsttätig einzustellen. Alternativ oder zusätzlich kann der Luftstrom auch in Abhängigkeit von aktuellen, insbesondere von einem Bediener vorgenommenen, Einstellungen anpassbar vorgesehen sein. Dafür ist es ebenfalls bevorzugt, dass der Feldhäcksler eine Bedieneinheit für einen Bediener aufweist, die zu einer manuellen Anpassung des Luftstroms eingerichtet ist.

In einer besonders bevorzugten Ausführungsform ist die Steuerungseinheit dazu eingerichtet, den Nachbeschleuniger bei einem Einfahren und/oder Ausfahren in einen Erntebestand
- von der Beschleunigungsposition in die Gebläseposition zu verstellen, und/oder
- den Luftstrom in Abhängigkeit von der aktuellen Erntegutmenge und/oder Erntegutverteilung anzupassen.

Dadurch wird der Erntegutstrom beim Einfahren und/oder beim Ausfahren in oder aus dem Erntebestand, bei dem sich die verarbeitete Erntegutmenge verringert, vergleichmäßigt, so dass ein gleichmäßiges Überladen des Ernteguts in den Transportwagen möglich ist.

In einer bevorzugten Ausführungsform ist der Nachbeschleuniger von der Beschleunigungsposition in die Gebläseposition verschieb- und/oder verschwenkbar. Ganz besonders bevorzugt ist er verschwenkbar vorgesehen.

Um den Beschleunigungsrotor des Nachbeschleunigers als Gebläse zu nutzen, ist es weiterhin bevorzugt, dass der Nachbeschleuniger in der Gebläseposition wenigstens einen Auslass aufweist, der an einer dem Förderkanal zugewandten Seite angeordnet ist und als Durchlass für den Luftstrom dient. Besonders bevorzugt ist der Auslass, insbesondere seine Größe und Form, durch die Stromleitelemente einstellbar. Dadurch können Stärke und Richtung des Luftstroms beeinflusst werden. Weiterhin bevorzugt weist der Nachbeschleuniger in der Gebläseposition einen oder mehrere Einlässe auf, durch die der Luftstrom in einen Innenraum des Nachbeschleunigers eindringen kann. Die Einlässe sind dabei bevorzugt nicht dem Förderkanal zugewandt angeordnet.

Die Aufgabe wird weiterhin gelöst mit einem Verfahren zum Fördern von Erntegut, insbesondere zum Fördern von Mais, in einem Förderkanal eines erfindungsgemäßen Feldhäckslers. Das Verfahren sieht vor, dass das Erntegut zumindest in einer Maisernteanordnung, in der ein Aufbereiter in den Förderkanal aufgenommen ist, durch Beaufschlagen mit einem Luftstrom eines als Gebläse beschleunigt wird. Dadurch können nicht nur große Erntegutmengen, sondern auch kleine Erntegutmengen, beispielsweise beim Einfahren oder Ausfahren in den Erntebestand, bei verringertem Kraftstoffverbrauch und verringertem Verschleiß, in einem gleichmäßigen Erntegutstrom in den Transportwagen überladen werden.

Dabei wird der Nachbeschleuniger als Gebläse zum Erzeugen des Luftstroms genutzt.

Weiterhin kann der Nachbeschleuniger sowohl in der Maisernteanordnung als auch in einer Grasernteanordnung auch in einer Beschleunigungsposition betrieben werden, in der er mechanisch auf das Erntegut einwirkt. Bei großen Erntegutmengen ist der Nachbeschleuniger daher auch in herkömmlicher Weise betreibbar. Um Kraftstoff einzusparen und zumindest in der Maisernteanordnung einen Verschleiß am Nachbeschleuniger, insbesondere an den Beschleunigungsschaufeln, zu vermeiden, ist es aber bevorzugt, den Nachbeschleuniger in der Maisernteanordnung in der Gebläseposition zu nutzen.

Dabei ist es besonders bevorzugt, dass der Luftstrom erntegutabhängig und/oder in Abhängigkeit von Betriebswerten des Feldhäckslers und/oder in Abhängigkeit von aktuellen Erntebedingungen manuell oder automatisch eingestellt wird.

Dafür werden bevorzugt eine Stärke und/oder Richtung des Luftstroms (S) kontinuierlich oder stufenweise angepasst. Besonders bevorzugt wird der erzeugte Luftstrom dafür kontinuierlich oder stufenweise verändert. Die Verstellung des Nachbeschleunigers von der Beschleunigungsposition in die Gebläseposition oder zurück sowie eine Einstellung des Luftstroms des Nachbeschleunigers können dabei sowohl automatisch durch eine Steuerungseinheit als auch manuell durch einen Bediener vorgenommen werden.

Die Aufgabe wird weiterhin gelöst mit einer Verwendung eines Gebläses zum Erzeugen eines Luftstroms zum Beschleunigen von Erntegut in einer Maisernteanordnung eines Feldhäckslers. Dabei wird der Luftstrom des Gebläses bevorzugt für kleine Erntegutmengen genutzt, um eine Vergleichmäßigung des Erntegutstroms zu bewirken, so dass dieser gleichmäßig auf einen Transportwagen überladbar ist.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: in (a) einen Feldhäcksler gemäß dem Stand der Technik; und
- Fig. 2: in (a) und (b) jeweils schematisch einen Ausschnitt aus einem erfindungsgemäßen Feldhäcksler.

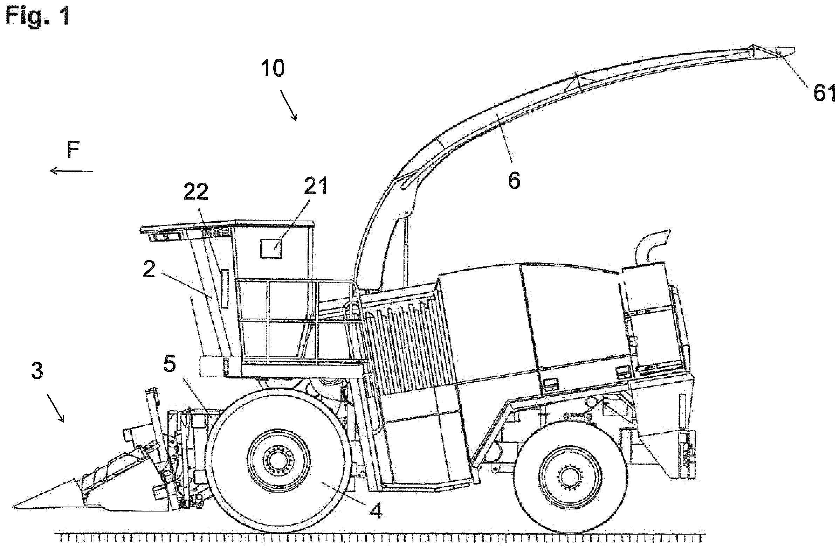

Fig. 1 zeigt einen Feldhäcksler 10 gemäß dem Stand der Technik. Der Feldhäcksler 10 weist ein Einzugsaggregat 5 auf, das in einem Erntebetrieb (nicht bezeichnet), in dem der Feldhäcksler 10 in eine Fahrtrichtung F über ein Feld (nicht gezeigt) gefahren wird, zum Einziehen von Erntegut (nicht gezeigt) in den Feldhäcksler 10 vorgesehen ist. Das Einzugsaggregat 5 ist zwischen vorderen Rädern 4 des Feldhäckslers in Fahrtrichtung F vorne angeordnet. Am Einzugsaggregat 5 ist ein Vorsatzgerät 3, beispielsweise ein Maisgebiss zum Ernten von Mais, ein Mähwerk zum Ernten von Gras oder eine Pick- up zur Aufnahme von Gras, befestigt. Mit dem Vorsatzgerät 3 wird das Erntegut aufgenommen und in das Einzugsaggregat 5 gefördert.

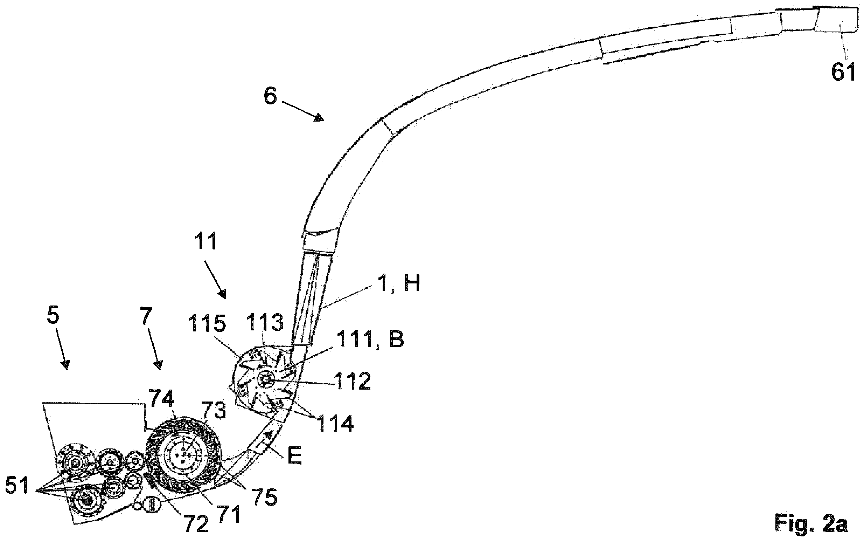

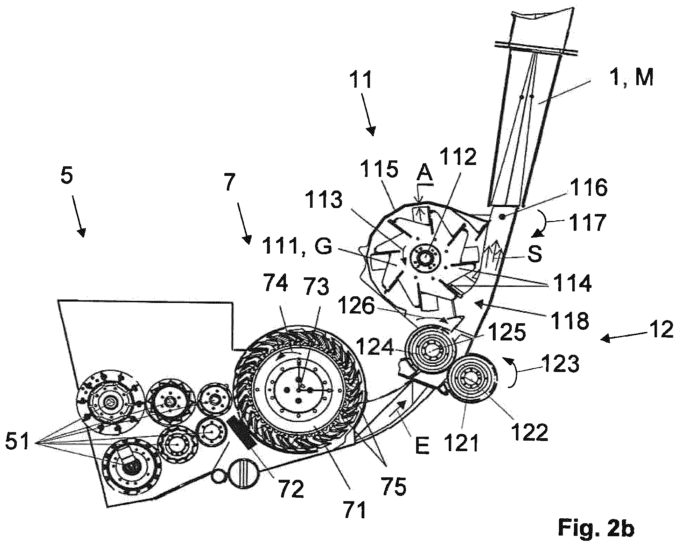

Der Feldhäcksler 10 ist zum Zerkleinern des Ernteguts vorgesehen. Dem Einzugsaggregat 5 ist dafür eine Zerkleinerungsvorrichtung 7 nachgeordnet. Mit der Zerkleinerungsvorrichtung 7 wird das Erntegut im Erntebetrieb des Feldhäckslers 10 zerkleinert. Der Zerkleinerungsvorrichtung 7 ist ein Förderkanal 1 (s. Fig. 2) nachgeordnet. Der Förderkanal 1 können ein Aufbereiter 12 (s. Fig. 2) zum Aufbereiten von Mais und/oder ein Nachbeschleuniger 11 (s. Fig. 2) nachgeordnet sein. Der Feldhäcksler 1 weist zudem ein Auswurfrohr 6 auf, das sich an den Förderkanal 1 anschließt. Das Auswurfrohr 6 ist zum Auswerfen des zerkleinerten Ernteguts auf einen Transportwagen (nicht gezeigt) vorgesehen. An einem offenen Ende des Auswurfrohrs 6 ist ein verstellbarer Auswurfstutzen vorgesehen, mit dem ein Auftreffpunkt des Ernteguts im Transportwagen einstellbar ist.

Fig. 2 (a) zeigt schematisch einen Ausschnitt aus einem erfindungsgemäßen Feldhäcksler 1. Sichtbar ist das Einzugsaggregat 5, dem die Zerkleinerungsvorrichtung 7 nachgeordnet ist. Nach dem Zerkleinern wird das Erntegut in den Förderkanal 1 gefördert. Eine Förderrichtung E des Ernteguts ist durch einen Pfeil bezeichnet. Zudem zeigt Fig. 2 (a) das sich an den Förderkanal 1 anschließende Auswurfrohr 6.

Das Einzugsaggregat 5 weist drei paar Förder- und Presswalzen 51 auf. Die Förder- und Presswalzen 51 sind zum Fördern und Pressen des Ernteguts ausgebildet. Dafür werden die Förder- und Presswalzen 51 jeweils in eine Drehrichtung (nicht bezeichnet) um eine Drehachse (nicht bezeichnet) gedreht. Dabei ist die Drehrichtung der Förder- und Presswalzen 51 eines jeden Paares jeweils gegensätzlich vorgesehen. Dadurch wird das Erntegut zwischen den Förder- und Presswalzen 51 in Förderrichtung E gefördert und dabei gepresst. Mit den Förder- und Presswalzen 51 wird es der Zerkleinerungsvorrichtung 7 zugeführt. Die Zerkleinerungsvorrichtung 7 ist hier als Häckselaggregat 7 ausgebildet. Im Folgenden werden daher die Begriffe Zerkleinerungsvorrichtung 7 und Häckselaggregat synonym verwendet. Das Häckselaggregat 7 umfasst eine Häckseltrommel 71 sowie eine Gegenschneide 72, zwischen denen das Erntegut geschnitten wird.

Die Häckseltrommel 71 wird dafür im Betrieb des Feldhäckslers 10 um eine Häckselachse 73 in eine Häckseldrehrichtung 74 gedreht. An der Häckseltrommel 71 sind in Häckseldrehrichtung 74 gleichmäßig verteilt Häckselmesser 75 angeordnet, die zum Schneiden des Ernteguts vorgesehen sind. Im Betrieb des Feldhäckslers 10 drehen sich die Häckselmesser 75 mit der Häckseltrommel 71 in die Häckseldrehrichtung 74. Dabei gerät das Erntegut in Eingriff der Häckselmesser 75 und wird jeweils zwischen einem der Häckselmesser 75 und der Gegenschneide 72 geschnitten.

Der Häckseltrommel 7 in Förderrichtung E nachgeordnet ist der Förderkanal 1 angeordnet. Der Förderkanal 1 ist hier in einer Grasernteanordnung H gezeigt. Bei der Grasernte wird das Erntegut nach dem Schneiden direkt durch den Förderkanal 1 und das Auswurfrohr 6 in den Transportwagen gefördert. Um das Erntegut dafür ausreichend zu beschleunigen, weist der zwischen dem Häckselaggregat 7 und dem Auswurfrohr 6 angeordnete Förderkanal 1 den Nachbeschleuniger 11 auf.

Der Nachbeschleuniger 11 umfasst einen Beschleunigungsrotor 111, der sich im Betrieb des Feldhäckslers 10 um eine Beschleunigungsachse 112 in eine Beschleunigungsdrehrichtung 113 dreht. An dem Beschleunigungsrotor 111 sind in Beschleunigungsdrehrichtung 113 gleichmäßig verteilt Beschleunigungsschaufeln 114 angeordnet, die zum Fördern des Ernteguts vorgesehen sind. Im Erntebetrieb des Feldhäckslers 10 drehen sich die Beschleunigungsschaufeln 114 mit dem Beschleunigungsrotor 111 in die Beschleunigungsdrehrichtung 113. Dabei durchsetzen die Beschleunigungsschaufeln 114 den Förderkanal 1 soweit, dass das Erntegut in Eingriff der Beschleunigungsschaufeln 114 gerät. Der Nachbeschleuniger 11 befindet sich dann in einer Beschleunigungsposition B. Ein dabei von einer Beschleunigungsschaufel 114 auf das Erntegut einwirkender Impuls beschleunigt das Erntegut ausreichend, so dass es durch das Auswurfrohr 6 in den Transportwagen gefördert werden kann.

Der Nachbeschleuniger 11 weist eine Rückwand 115 auf, die einen Abstand A zum Beschleunigungsrotor 111 aufweist. Die Rückwand 115 ist verstellbar vorgesehen, so dass der Abstand A veränderbar ist. Alternativ kann der Abstand auch durch Verstellen des Beschleunigungsrotors 111 gegenüber der Rückwand 115 veränderbar sein. Ein Grad einer Beschleunigung des Ernteguts durch den Nachbeschleuniger 11 ist durch die Verstellung der Rückwand 115 einstellbar. Dies ist von einem Bediener des Feldhäckslers 10 manuell oder ferngesteuert an der Bedieneinheit 22 möglich. Zum Erhöhen der Beschleunigungsleistung wird der Abstand verringert. Wird weniger Beschleunigungsleistung benötigt, kann der Abstand hingegen vergrößert werden, wobei weniger Energie für den Nachbeschleuniger 11 benötigt wird. Um den Feldhäcksler 10 möglichst effizient zu betreiben, kann die Beschleunigungsleistung so den aktuell vorherrschenden Erntebedingungen angepasst werden.

Das Verändern der Beschleunigungsleistung des Nachbeschleunigers 11 kann auch automatisch erfolgen, beispielsweise in Abhängigkeit von aktuellen Erntebedingungen, von Betriebsparametern des Feldhäckslers 10 oder vom Erntegut. Dafür weist der Feldhäcksler 10 eine Steuerungseinheit 22 (s. Fig. 1) auf, die dazu eingerichtet ist, die automatische Veränderung zu bewirken.

In dem in Fig. 2 (b) gezeigten Ausschnitt des erfindungsgemäßen Feldhäckslers 10 sind das Einzugsaggregat 5, das Häckselaggregat 7 sowie der Förderkanal 1 vergrößert dargestellt. Das Auswurfrohr 6 ist hier nicht gezeigt. Dabei befindet sich der Förderkanal 1 im Gegensatz zur Fig. 2 (a) in einer Maisernteanordnung M.

Während der Maisernte ist im Förderkanal 1 der Aufbereiter 12 angeordnet. Der Förderkanal 1 befindet sich dann in der Maiserntekonfiguration M. Der Aufbereiter 12 dient zum Aufbrechen der Maiskörner. Um ein Zerfasern des Grass bei der Grasernte zu vermeiden, ist der Aufbereiter 12 in der Grasernteanordnung H nicht im Förderkanal 1 angeordnet.

Der Aufbereiter 12 umfasst zwei Crackerwalzen 121, 124, die sich jeweils um eine Crackerachse 122, 125 drehen, wobei eine Crackerdrehrichtung 123, 126 der Crackerwalzen 121, 124 gegensätzlich zueinander vorgesehen ist. Der Mais wird daher im Betrieb des Feldhäckslers 10 zwischen den Crackerwalzen 121, 124 hindurch gefördert. Dabei wird die Schale der Maiskörner aufgebrochen, so dass die Stärke im Innern der Maiskörner zugänglich ist. Die Maiskörner werden durch die Crackerwalzen 121, 124 bereits beschleunigt. Es hat sich gezeigt, dass die Beschleunigungsleistung durch die Crackerwalzen 121, 124 oftmals bereits ausreichend ist, um das Erntegut durch das Auswurfrohr 6 in den Transportwagen zu fördern. In der Maiserntekonfiguration M ist der Nachbeschleuniger 11 daher oftmals, insbesondere abhängig beispielsweise von Erntebedingungen wie die Feuchtigkeit oder Betriebsbedingungen wie die Fahrgeschwindigkeit, gar nicht erforderlich.

Jedoch ist eine Verteilung der Maiskörner bei einem Betrieb des Förderkanals 1 ohne Nachbeschleuniger 11, insbesondere bei einer geringen Erntegutmenge, oftmals ungleichmäßig, so dass das Überladen auf einen Transportwagen dann ungleichmäßig erfolgt.

Um eine Vergleichmäßigung des Erntegutstroms zu bewirken, ist der Nachbeschleuniger 11 des Feldhäckslers 10 hier daher von einer Beschleunigungsposition B in eine Gebläseposition G verstellt. In der Gebläseposition G ist er zumindest teilweise aus dem Förderkanal 1 ausgestellt, so dass er diesen freigibt und das Erntegut den Förderkanal 1 ungehindert durchströmen kann. Zudem wird der Nachbeschleuniger 11 in der Gebläseposition G angetrieben, so dass er als Gebläse wirkt und einen Luftstrom S erzeugt. Der Luftstrom ist hier durch Pfeile S in Strömungsrichtung schematisch dargestellt.

Der Luftstrom S wirkt auf die Maiskörner. Dadurch werden diese beschleunigt, gefördert und ihre Verteilung wird vergleichmäßigt.

Um den Luftstrom S zu leiten, ist ein Auslass 118 auf der dem Förderkanal 1 zugewandten Seite des Nachbeschleunigers 11 vorgesehen. Es können zudem Stromleitelemente (nicht gezeigt) zum Leiten des Luftstroms S, insbesondere einer Richtung des Luftstroms S, vorgesehen sein. Eine Stärke des Luftstroms S kann durch Verändern einer Drehgeschwindigkeit des Beschleunigungsrotors 111 und/oder Ändern des Abstands A zwischen der Rückwand 115 und dem Beschleunigungsrotor 111, angepasst werden.

Dafür weist der Feldhäcksler 12 die Steuerungseinheit 22 auf, die zum Anpassen des Luftstroms S eingerichtet ist. Beim Ein- und Ausfahren in den Bestand und/oder bei einer geringen beförderten Erntegutmenge ist die Steuerungseinheit 22 dazu eingerichtet, den Luftstrom S automatisch anzupassen. Dafür wird die Erntegutmenge, insbesondere im Förderkanal 1, sensorisch erfasst. Zusätzlich oder alternativ kann das Ein- und Ausfahren in den Bestand dafür beispielsweise anhand von Betriebsparametern des Feldhäckslers 10 oder durch eine Bilderfassung frontseitig des Feldhäckslers 10 erfasst werden. Der Nachbeschleuniger 11, insbesondere seine Position G, B und/oder der mit ihm erzeugte Luftstrom S, kann zusätzlich oder alternativ auch vom Bediener an der Bedieneinheit 21 einstellbar vorgesehen sein.

## Patentansprüche

1. Feldhäcksler (10) mit einem Förderkanal (1) zum Fördern von Erntegut, der in einer Förderrichtung (E) des Ernteguts einer Zerkleinerungsvorrichtung (7) für das Erntegut nachgeordnet ist, wobei der Förderkanal (1) einen Nachbeschleuniger (11) umfasst, der in einer Grasernteanordnung (H) in einer Beschleunigungsposition (B) angeordnet ist, in der er in den Förderkanal (1) eingestellt und zum Beschleunigen des Ernteguts vorgesehen ist, und wobei in einer Maisernteanordnung (M) ein Aufbereiter (12) in den Förderkanal (1) aufgenommen ist, der in der Grasernteanordnung (H) nicht im Förderkanal (1) angeordnet ist,
**dadurch gekennzeichnet, dass**
der Nachbeschleuniger (11) in der Maisernteanordnung (M) von der Beschleunigungsposition (B) in eine Gebläseposition (G) verstellbar ist, in der er aus dem Förderkanal (1) ausgestellt ist und als ein Gebläse wirkt, sodass der Feldhäcksler (10) in der Maisernteanordnung (M) das Gebläse umfasst, das zum Beschleunigen von Erntegut dient, ohne mechanisch auf das Erntegut einzuwirken.

2. Feldhäcksler (10) nach Anspruch 1, **dadurch gekennzeichnet, dass** der Nachbeschleuniger (11) einen Beschleunigungsrotor (111) mit Beschleunigungsschaufeln (114) umfasst, die in der Beschleunigungsposition (B) mechanisch mit dem Erntegut zusammenwirken, und die in der Gebläseposition (G) zum Erzeugen eines Luftstroms (S) vorgesehen sind.

3. Feldhäcksler (10) nach einem der vorherigen Ansprüche, **dadurch gekennzeichnet, dass** er eine Steuerungseinheit (21) umfasst, die dazu eingerichtet ist, den vom Nachbeschleuniger (11) in der Gebläseposition (G) erzeugten Luftstrom (S), insbesondere eine Stärke und/oder Richtung des Luftstroms (S), zu verändern.

4. Feldhäcksler (10) nach einem der vorherigen Ansprüche, **dadurch gekennzeichnet, dass** die Steuerungseinheit (21) dazu eingerichtet ist, den Luftstrom (S) kontinuierlich oder stufenweise zu verändern.

5. Feldhäcksler (10) nach einem der vorherigen Ansprüche, **dadurch gekennzeichnet, dass** die Steuerungseinheit (21) dazu eingerichtet ist, den Luftstrom (S) erntegutabhängig, und/oder in Abhängigkeit von Betriebswerten des Feldhäckslers, und/oder in Abhängigkeit von aktuellen Erntebedingungen, insbesondere von einer aktuell beförderten Erntegutmenge, zu verändern.

6. Feldhäcksler (10) nach einem der vorherigen Ansprüche, **dadurch gekennzeichnet, dass** die Steuerungseinheit (21) dazu eingerichtet ist, den Luftstrom (S) selbsttätig oder in Abhängigkeit von aktuellen, insbesondere durch den Bediener vorgenommenen, Einstellungen zu ändern.

7. Feldhäcksler (10) nach einem der vorherigen Ansprüche, **dadurch gekennzeichnet, dass** die Steuerungseinheit (21) dazu eingerichtet ist, den Nachbeschleuniger (11) bei einem Einfahren und/oder Ausfahren in einen Erntebestand
• von der Beschleunigungsposition (B) in die Gebläseposition (G) zu verstellen, und/oder
• den Luftstrom (S) in Abhängigkeit von der aktuellen Erntegutmenge und/oder Erntegutverteilung anzupassen.

8. Feldhäcksler (10) nach einem der vorherigen Ansprüche, **dadurch gekennzeichnet, dass** der Nachbeschleuniger (11) von der Beschleunigungsposition (B) in die Gebläseposition (G) verschieb- und/oder verschwenkbar ist.

9. Feldhäcksler (10) nach einem der vorherigen Ansprüche, **dadurch gekennzeichnet, dass** der Nachbeschleuniger (11) in der Gebläseposition (G) wenigstens einen Auslass (118) aufweist, der an einer dem Förderkanal (1) zugewandten Seite angeordnet ist und als Durchlass für den Luftstrom (S) dient.

10. Verfahren zum Fördern von Erntegut, insbesondere Mais, in einem Förderkanal (1) eines Feldhäckslers (10) nach einem der vorherigen Ansprüche, **dadurch gekennzeichnet, dass** das Erntegut zumindest in einer Maisernteanordnung (M), in der ein Aufbereiter (12) in den Förderkanal (1) aufgenommen ist, durch Beaufschlagen mit einem Luftstrom (S) des Gebläses beschleunigt wird.

11. Verfahren nach Anspruch 10, **dadurch gekennzeichnet, dass** der Luftstrom (S) erntegutabhängig und/oder in Abhängigkeit von Betriebswerten des Feldhäckslers (10) und/oder in Abhängigkeit von aktuellen Erntebedingungen manuell oder automatisch eingestellt wird.

12. Verfahren nach einem der Ansprüche 10 - 11, **dadurch gekennzeichnet, dass** eine Stärke und/oder Richtung des Luftstroms (S) kontinuierlich oder stufenweise angepasst werden.

## Claims

1. Forage harvester (10) having a conveying channel (1) for conveying harvested crop, which conveying channel is arranged downstream of a comminuting device (7) for the harvested crop in a conveying direction (E) of the harvested crop, wherein the conveying channel (1) comprises a post-accelerator (11) which, in a grass harvesting arrangement (H), is arranged in an acceleration position (B), in which the post-accelerator is positioned in the conveying channel (1) and is provided for accelerating the harvested crop, and wherein, in a corn harvesting arrangement (M), a processor (12) is accommodated in the conveying channel (1), which processor is not arranged in the conveying channel (1) in the grass harvesting arrangement (H),
**characterized in that**
in the corn harvesting arrangement (M), the post-accelerator (11) can be moved from the acceleration position (B) to a blower position (G), in which the post-accelerator is positioned out of the conveying channel (1) and acts as a blower, so that, in the corn harvesting arrangement (M), the forage harvester (10) comprises the blower, which serves to accelerate harvested crop without mechanically acting on the harvested crop.

2. Forage harvester (10) according to claim 1, **characterized in that** the post-accelerator (11) comprises an acceleration rotor (111) having acceleration blades (114) which, in the acceleration position (B), interact mechanically with the harvested crop and which are provided for generating an air flow (S) in the blower position (G).

3. Forage harvester (10) according to either one of the preceding claims, **characterized in that** it comprises a control unit (21) which is designed to change the air flow (S) generated by the post-accelerator (11) in the blower position (G), in particular the intensity and/or direction of the air flow (S).

4. Forage harvester (10) according to any one of the preceding claims, **characterized in that** the control unit (21) is designed to change the air flow (S) continuously or in steps.

5. Forage harvester (10) according to any one of the preceding claims, **characterized in that** the control unit (21) is designed to change the air flow (S) according to the harvested crop, and/or according to operating values of the forage harvester, and/or according to current harvesting conditions, in particular a harvested-crop amount currently being conveyed.

6. Forage harvester (10) according to any one of the preceding claims, **characterized in that** the control unit (21) is designed to change the air flow (S) automatically or according to current settings, in particular made by the operator.

7. Forage harvester (10) according to any one of the preceding claims, **characterized in that** the control unit (21) is designed to, when a stand to be harvested is entered and/or exited,
• move the post-accelerator (11) from the acceleration position (B) to the blower position (G) and/or
• adjust the air flow (S) according to the current harvested-crop amount and/or harvested-crop distribution.

8. Forage harvester (10) according to any one of the preceding claims, **characterized in that** the post-accelerator (11) can be translated and/or pivoted from the acceleration position (B) to the blower position (G).

9. Forage harvester (10) according to any one of the preceding claims, **characterized in that** the post-accelerator (11) has, in the blower position (G), at least one outlet (118), which is located on a side facing the conveying channel (1) and which serves as a passage for the air flow (S).

10. Method for conveying harvested crop, in particular corn, in a conveying channel (1) of a forage harvester (10) according to any one of the preceding claims, **characterized in that,** at least in a corn harvesting arrangement (M), in which a processor (12) is accommodated in the conveying channel (1), the harvested crop is accelerated by an air flow (S) from the blower being applied thereto.

11. Method according to claim 10, **characterized in that** the air flow (S) is manually or automatically adjusted according to the harvested crop and/or according to operating values of the forage harvester (10) and/or according to current harvesting conditions.

12. Method according to any one of claims 10-11, **characterized in that** the intensity and/or direction of the air flow (S) is adjusted continuously or in steps.

## Revendications

1. Ramasseuse-hacheuse (10) comportant un canal de transfert (1) pour transférer le produit récolté qui, selon la direction de transfert (E) du produit récolté est en aval d'un dispositif broyeur (7) du produit,
- le canal de transfert (1) comprenant un poste accélérateur (11) qui, en disposition de récolte d'herbe (H) est dans une position d'accélération (B) dans laquelle il vient dans le canal de transfert (1) pour accélérer le produit récolté et qui, en disposition de récolte de maïs (M) comporte un préparateur (12) dans le canal de transfert (1) qui ne vient pas dans le canal de transfert (1) pour la disposition de récolte d'herbe (H), ramasseuse-hacheuse **caractérisée en ce que**
le post-accélérateur (11) dans la disposition de récolte de maïs (M), peut passer de la position d'accélération (B) à la position de soufflage (G) dans laquelle il est dégagé du canal de transfert (1) et fonctionne comme soufflante de sorte que la ramasseuse hacheuse (10) en disposition de récolte de maïs (M), comprend la soufflante servant à accélérer le produit récolté sans agir mécaniquement sur le produit récolté.

2. Ramasseuse-hacheuse (10) selon la revendication 1,
**caractérisée en ce que**
le post-accélérateur (11) comprend un rotor d'accélération (111) avec des pales d'accélération (114) qui, en position d'accélération (B) coopèrent mécaniquement avec le produit récolté et qui, en position de soufflante (G) génèrent un courant d'air (S).

3. Ramasseuse-hacheuse (10) selon l'une des revendications précédentes,
**caractérisée en ce qu'**elle comprend
une unité de commande (21) pour modifier la veine d'air (S) générée par le post-accélérateur (11) en position de soufflante (G), notamment l'intensité et/ou la direction de la veine d'air (S).

4. Ramasseuse-hacheuse (10) selon l'une des revendications précédentes,
**caractérisée en ce que**
l'unité de commande (21) est conçue pour modifier en continu la veine d'air (S) ou par étapes.

5. Ramasseuse-hacheuse (10) selon l'une des revendications précédentes,
**caractérisée en ce que**
l'unité de commande (21) est conçue pour modifier la veine d'air (S) en fonction de la récolte et/ou selon des paramètres de fonctionnement de la ramasseuse hacheuse et/ou en fonction des conditions actuelles de récolte, notamment de la quantité actuelle récoltée, transférée.

6. Ramasseuse-hacheuse (10) selon l'une des revendications précédentes,
**caractérisée en ce que**
l'unité de commande (21) est conçue pour modifier la veine d'air (S) automatiquement ou en fonction des réglages actuels notamment demandés par l'opérateur.

7. Ramasseuse-hacheuse (10) selon l'une des revendications précédentes,
**caractérisée en ce que**
l'unité de commande (21) est conçue pour intervenir sur le post-accélérateur (11) lors du passage et/ou du dégagement d'un état de récolte,
* pour passer de la position d'accélération (B) à la position de soufflante (G) et/ou
* adapter la veine d'air (S) en fonction de la quantité actuelle récoltée et/ou de la répartition du produit récolté.

8. Ramasseuse-hacheuse (10) selon l'une des revendications précédentes,
**caractérisée en ce que**
le post-accélérateur (11) peut être coulissé et/ou basculé de la position d'accélération (B) à la position de soufflante (G).

9. Ramasseuse-hacheuse (10) selon l'une des revendications précédentes,
**caractérisée en ce que**
le post-accélérateur (11) comporte en position de soufflante (G) au moins une sortie (118) sur le côté tourné vers le canal de transfert (1) et servant de passage pour la veine d'air (S).

10. Procédé de transfert de produit récolté notamment de maïs dans un canal de transfert (1) d'une ramasseuse-hacheuse (10) selon l'une des revendications précédentes,
**caractérisé en ce que**
on reçoit le produit de récolte au moins dans une disposition de récolte de maïs (M) dans un préparateur (12) dans le canal de transfert (1) par l'action d'une veine d'air (S) de la soufflante.

11. Procédé selon la revendication 10,
**caractérisé en ce que**
on règle la veine d'air (S) en fonction du produit récolté et/ou en fonction des paramètres de la ramasseuse-hacheuse (10) et/ou en fonction des conditions actuelles de récolte, par un réglage manuel ou automatique.

12. Ramasseuse-hacheuse selon l'une des revendications 10-11, **caractérisée en ce que**
on adapte l'intensité et/ou la direction de la veine d'air (S) en continu ou par échelons.
